(19) Europäisches Patentamt
European Patent Office
Office européen des brevets

(11) **EP 4 773 562 A1**

(12) **EUROPEAN PATENT APPLICATION**
published in accordance with Art. 153(4) EPC

(43) Date of publication:
**08.07.2026 Bulletin 2026/28**

(21) Application number: **24869961.3**

(22) Date of filing: **08.07.2024**

(51) International Patent Classification (IPC):
**H04L 27/26** (2006.01)

(52) Cooperative Patent Classification (CPC):
**H04L 27/26**

(86) International application number:
**PCT/CN2024/104123**

(87) International publication number:
**WO 2025/066404 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 CN 202311270841**

(71) Applicant: **ZTE Corporation
Shenzhen, Guangdong 518057 (CN)**

(72) Inventors:
• **XIN, Yu
Shenzhen, Guangdong 518057 (CN)**
• **HUA, Jian
Shenzhen, Guangdong 518057 (CN)**
• **BAO, Tong
Shenzhen, Guangdong 518057 (CN)**

(74) Representative: **Aipex B.V.
Vestdijk 51
5611 CA Eindhoven (NL)**

(54) **DATA TRANSMISSION METHOD, DEVICE, AND STORAGE MEDIUM**

(57) Provided are a data transmission method, a device, and a storage medium. The method includes dividing to-be-transmitted data into N first sequences (S110), where the n-th first sequence includes k(n) data elements, k(n) is a positive integer, n = 1, 2, ..., N, and N is an integer greater than or equal to 2; performing inverse Fourier transform on the N first sequences separately to obtain N second sequences (S120); performing frequency shifting on the N second sequences to obtain N third sequences (S130); performing inverse Fourier transform on the N third sequences to form a target time-domain data sequence (S140); and transmitting the target time-domain data sequence on a preconfigured time-frequency resource (S150).

```
┌─────────────────────────────────────────────────────┐
│  Divide to-be-transmitted data into N first sequences │  S110
└─────────────────────────────────────────────────────┘
                          │
┌─────────────────────────────────────────────────────┐
│  Perform inverse Fourier transform on the N first     │  S120
│  sequences separately to obtain N second sequences    │
└─────────────────────────────────────────────────────┘
                          │
┌─────────────────────────────────────────────────────┐
│  Perform frequency shifting on the N second sequences │  S130
│  to obtain N third sequences                          │
└─────────────────────────────────────────────────────┘
                          │
┌─────────────────────────────────────────────────────┐
│  Perform inverse Fourier transform on the N third     │  S140
│  sequences to form the target time-domain data        │
│  sequence                                             │
└─────────────────────────────────────────────────────┘
                          │
┌─────────────────────────────────────────────────────┐
│  Transmit the target time-domain data sequence on a   │  S150
│  preconfigured time-frequency resource                │
└─────────────────────────────────────────────────────┘
```

**FIG. 1**

**Description**

TECHNICAL FIELD

The present application relates to the field of communications, for example, a data transmission method, a device, and a storage medium.

BACKGROUND

In 5G communication technology, cyclic prefix-orthogonal frequency division multiplexing (CP-OFDM) is used as the fundamental waveform, and different parameter sets (Numerology) may be used between two adjacent subbands, destroying the orthogonality between subcarriers and bringing a new interference problem. To address the interference problem, one relatively straightforward approach is to insert a guard band between two transmission bands having different Numerologies; however, this approach wastes frequency resources. It is urgent to solve the problems of how to design a unified waveform architecture to flexibly integrate multiple waveforms and how to flexibly support applications with different channel bandwidths.

SUMMARY

In view of this, embodiments of the present application provide a data transmission method, a device, and a storage medium, reducing the resources occupied by the guard interval, reducing inter-system or inter-subband interference, and improving spectrum efficiency.

Embodiments of the present application provide a data transmission method.

The method includes dividing to-be-transmitted data into N first sequences, where the n-th first sequence includes $k(n)$ data elements, $k(n)$ is a positive integer, $n = 1, 2, ..., N$, and N is an integer greater than or equal to 2; performing inverse Fourier transform on the N first sequences separately to obtain N second sequences; performing frequency shifting on the N second sequences to obtain N third sequences; performing inverse Fourier transform on the N third sequences to form a target time-domain data sequence; and transmitting the target time-domain data sequence on a preconfigured time-frequency resource.

Embodiments of the present application provide a communication device. The communication device includes a memory and at least one processor.

The memory is configured to store at least one program.

When executed by the at least one processor, the at least one program causes the at least one processor to perform the method of any previous embodiment.

Embodiments of the present application provide a storage medium storing a computer program which, when executed by a processor, causes the processor to perform the method of any previous embodiment of the present application.

BRIEF DESCRIPTION OF DRAWINGS

FIG. 1 is a flowchart of a data transmission method according to embodiments of the present application.

FIG. 2 is a flowchart of generating a target time-domain data sequence according to embodiments of the present application.

FIG. 3 is a flowchart of generating a target time-domain data sequence according to embodiments of the present application.

FIG. 4 is a flowchart of generating a target time-domain data sequence according to embodiments of the present application.

FIG. 5 is a flowchart of generating a target time-domain data sequence according to embodiments of the present application.

FIG. 6 is a flowchart of generating a target time-domain data sequence according to embodiments of the present application.

FIG. 7 is a flowchart of generating a target time-domain data sequence according to embodiments of the present application.

FIG. 8 is a flowchart of generating a target time-domain data sequence according to embodiments of the present application.

FIG. 9 is a flowchart of generating a target time-domain data sequence according to embodiments of the present application.

FIG. 10 is a flowchart of generating a target time-domain data sequence according to embodiments of the present application.

FIG. 11 is a flowchart of generating a target time-domain data sequence according to embodiments of the present application.

FIG. 12 is a flowchart of generating a target time-domain data sequence according to embodiments of the present application.

FIG. 13 is a flowchart of transmission of to-be-transmitted data according to embodiments of the present application.

FIG. 14 is a block diagram of a data transmission apparatus according to embodiments of the present application.

FIG. 15 is a diagram illustrating the structure of a communication device according to embodiments of the present application.

DETAILED DESCRIPTION

Embodiments of the present application are described hereinafter in conjunction with drawings. The present application is described hereinafter in conjunction with embodiments and the drawings. The examples described hereinafter are intended to explain the present application and not to limit the scope of the present application.

Long-term evolution (LTE) is a 4G (Fourth Generation) wireless cellular communication technology. LTE uses orthogonal frequency-division multiplexing (OFDM) technology. Time-frequency resources formed of subcarriers and OFDM symbols constitute wireless physical time-frequency resources of the LTE system. The OFDM technology has been widely used in wireless communications. By using a cyclic prefix (CP), a CP-OFDM system can effectively address multipath delay issues and divide a frequency-selective channel into a set of parallel flat channels, greatly simplifying channel estimation and providing relatively high channel estimation accuracy. However, the performance of a CP-OFDM system is relatively sensitive to frequency offset and time offset between adjacent subbands, mainly because the system has relatively large spectral leakage, thereby easily causing inter-subband interference. An LTE system uses guard intervals in the frequency domain, resulting in a lower spectral efficiency. Therefore, new technologies are required to suppress out-of-band leakage.

In 5G NR, CP-OFDM is still used as the fundamental waveform, and different Numerologies may be used between two adjacent subbands, destroying the orthogonality between subcarriers and bringing a new interference problem. To address the interference problem, one relatively straightforward approach is to insert a guard band between two transmission bands having different Numerologies; however, this approach wastes frequency resources.

Future 6G services will operate over a wide range of frequency bands and will be deployed in various manners. 6G services require not only multi-bandwidth channels but also waveform schemes suitable for different scenarios. Implementing each waveform scheme independently increases the costs of base stations and terminals. It is urgent to solve the problems of how to design a unified waveform architecture to flexibly integrate multiple waveforms and how to flexibly support applications with different channel bandwidths.

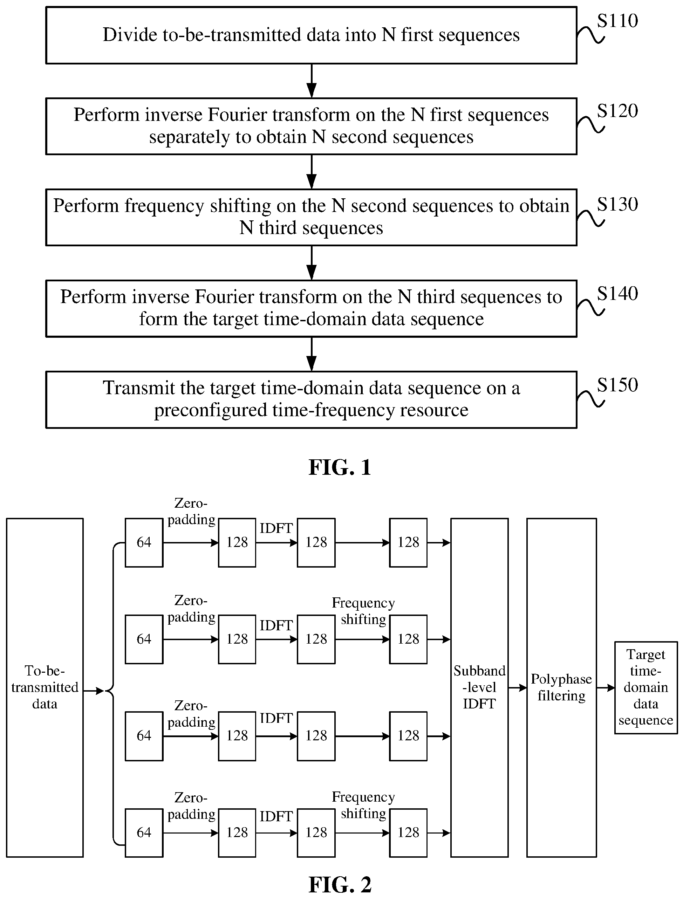

In an embodiment, FIG. 1 is a flowchart of a data transmission method according to embodiments of the present application. This embodiment is applicable to scenarios requiring flexible support for multiple bandwidth channels and multiple waveforms. As shown in FIG. 1, this embodiment includes S110 to S130.

In S110, to-be-transmitted data is divided into N first sequences.

The n-th first sequence includes $k(n)$ data elements, $k(n)$ is a positive integer, $n = 1, 2, ..., N$, and N is an integer greater than or equal to 2. In an example, the to-be-transmitted data is a data sequence to be sent from a transmitting end to a receiving end. The to-be-transmitted data may be frequency-domain data or time-domain data. In an example, when the to-be-transmitted data is frequency-domain data, the to-be-transmitted data is divided into first sequences that are also frequency-domain data. In an example, when the to-be-transmitted data is time-domain data, it is feasible to divide the to-be-transmitted data into N data groups that are also time-domain data and then perform Fourier transform on the N time-domain data groups to obtain N first sequences; or it is feasible to perform Fourier transform on the to-be-transmitted data to obtain frequency-domain data and then divide the frequency-domain data to obtain N first sequences.

In S120, inverse Fourier transform is performed on the N first sequences separately to obtain N second sequences.

In S130, frequency shifting is performed on the N second sequences to obtain N third sequences.

In S140, inverse Fourier transform is performed on the N third sequences to form the target time-domain data sequence.

In S150, the target time-domain data sequence is transmitted on a preconfigured time-frequency resource.

In this embodiment, to-be-transmitted data is divided into N first sequences, inverse Fourier transform is performed on the N first sequences separately to obtain N second sequences, frequency shifting is performed on the N second sequences to obtain N third sequences, and then inverse Fourier transform is performed on the N third sequences to form the target time-domain data sequence. By performing frequency shifting before the secondary inverse Fourier transform, it is possible to map each subband to the frequency-domain index of the channel bandwidth or adjust the system zero-frequency index of each subband to the actual index.

In an embodiment, performing frequency shifting on the N second sequences to obtain N third sequences includes multiplying the n-th second sequence of the N second sequences by a coefficient group $X(n)$ to obtain the N third sequences, where n = 1, 2, ..., N, and N is an integer greater than or equal to 2.

In an embodiment, when elements in $X(n)$ are all 1, no frequency shifting is performed on the n-th second sequence.

In an embodiment, elements in the coefficient group $X(n)$ satisfy at least one of the following conditions: the modulus of each element in the coefficient group $X(n)$ is constantly 1; the coefficient group $X(n)$ is a phase compensation coefficient group; the coefficient group $X(n)$ is a phase sequence; the coefficient group $X(n)$ is related to a zero-frequency index of a channel bandwidth and a frequency-domain index corresponding to the n-th first sequence; phase differences of adjacent elements in the coefficient group $X(n)$ are equal; or phases of the elements in the coefficient group $X(n)$ increase or decrease at equal intervals. In an example, when the coefficient group $X(n)$ is a sequence in which the modulus of each element is constantly 1, $X(n)$ is a phase compensation coefficient group, that is, the coefficient group $X(n)$ is a phase sequence. In an example, phase differences of adjacent elements in the coefficient group $X(n)$ are equal. In an example, phases of the elements in the coefficient group $X(n)$ increase or decrease at equal intervals. Through phase compensation, the frequency-domain index of each subband can be adjusted.

In an embodiment, the zero-frequency index of the channel bandwidth satisfies one of the zero-frequency index of a baseband; or a zero-frequency index during the inverse Fourier transform on the N third sequences. In an example, the zero-frequency index of the channel bandwidth is also the zero-frequency index of the baseband. In an example, the zero-frequency index of the channel bandwidth is also the zero-frequency index during inverse Fourier transform on the N third sequences.

In an embodiment, before performing inverse Fourier transform on the N first sequences separately to obtain the N second sequences, the method also includes performing zero-padding at both ends on the N first sequences separately to obtain zero-padded first sequences. Each zero-padded first sequence includes $M*s(n)$ data elements, M is a positive integer, and the size of the inverse Fourier transform on each first sequence is $M*s(n)$. In an example, zero-padding is first performed at both ends of each first sequence to obtain zero-padded first sequences, each zero-padded first sequence including $M*s(n)$ data elements. Then, inverse Fourier transform is performed on each zero-padded first sequence, where the size of the inverse Fourier transform on each first sequence is $M*s(n)$. In an example, the inverse Fourier transform is oversampled inverse Fourier transform.

In an embodiment, a channel bandwidth includes N subbands that correspond to the N first sequences one to one.

In an embodiment, in response to determining that a subcarrier in a subband is a zero-frequency index of a baseband, a second sequence formed from a first sequence corresponding to the subband is not subjected to frequency shifting.

In an embodiment, system zero-frequency indices corresponding to at least some subbands are the same as the zero-frequency index of the baseband; or system zero-frequency indices corresponding to at least some subbands are different from the zero-frequency index of the baseband. In an example, for some subbands, the system zero-frequency index is the same as the baseband zero-frequency index; and for some subbands, the system zero-frequency index is different from the baseband zero-frequency index.

In an embodiment, for each subband, a system zero-frequency index corresponding to the subband is different from a frequency-domain index of a zero frequency of the subband to which data is mapped during inverse Fourier transform.

In an embodiment, when performing inverse Fourier transform on data in different subbands having the same subcarrier spacing in the same system, zero subcarriers in different subbands have the same index.

In an embodiment, a system to which a subband belongs includes at least one of the following: a long-term evolution (LTE) system, a 5G New Radio (NR) system, or a 6G system.

In an embodiment, before multiplying the n-th second sequence of the N second sequences by the coefficient group X(n), the method also includes adding a cyclic prefix (CP) having a length of Ncp to the N second sequences. Ncp is a natural number, the number of elements in the coefficient group X(n) is the sum of Ncp and M*s(n), and in response to determining that Ncp is 0, no CP is added to the N second sequences. In an example, the N second sequences are added with a CP of a length of Ncp and then multiplied by the coefficient group. The coefficient group X(n) is a sequence including Ncp+M*s(n) elements. When Ncp is equal to 0, it is indicated that no CP is added to the second sequences.

In an embodiment, in response to determining that, when performing inverse Fourier transform on the third sequences, a zero-frequency index corresponding to the third sequences is aligned with a zero-frequency index for demodulation at a receiving end corresponding to the first sequences, phase sequences element-wise multiplied with symbols for frequency shifting corresponding to the first sequences are the same. Alternatively, in response to determining that, when performing inverse Fourier transform on the third sequences, a zero-frequency index corresponding to the third sequences is not aligned with a zero-frequency index for demodulation at a receiving end corresponding to the first sequences, phase sequences element-wise multiplied with consecutive symbols for frequency shifting corresponding to the first sequences are consecutive. The zero-frequency index for the inverse Fourier transform on the third sequences is aligned with a baseband zero-frequency index at a transmitting end.

In an embodiment, phases of phase compensation coefficient groups X(n) for at least part of the second sequences are the same across consecutive time-domain symbols; or phases of phase compensation coefficient groups X(n) for at least part of the second sequences are consecutive across consecutive time-domain symbols. Phases of phase compensation coefficient groups X(n) for some of the second sequences are the same across consecutive time-domain symbols. Phases of phase compensation coefficient groups X(n) for some of the second sequences are consecutive across consecutive time-domain symbols. According to the system to which the subband belongs, the same phases or consecutive phases may be selected for compensation.

In an embodiment, frequency shifting processing of time-domain data carried on at least some subbands includes phase compensation coefficient groups X1(n) having a same phase across consecutive time-domain symbols; or phase compensation coefficient groups X2(n) having consecutive phases across consecutive time-domain symbols. In an embodiment, frequency shifting processing of time-domain data carried on some subbands includes phase compensation coefficient groups X1(n) having the same phases across consecutive time-domain symbols; or phase compensation coefficient groups X2(n) having consecutive phases across consecutive time-domain symbols. For some subbands, the system zero-frequency index is different from the baseband zero-frequency index, and the system zero-frequency index is not within the subband; therefore, two types of phase compensation are required.

In an embodiment, in response to determining that a frequency-domain difference between an index of a zero subcarrier to which a data element of a first sequence is mapped during the inverse Fourier transform and a zero-frequency index of a corresponding baseband is y(n), a phase difference between adjacent elements of a phase sequence element-wise multiplied is $mod(y(n), M*s(n))/(M*s(n))*2\pi$, where the frequency-domain difference y(n) is measured in units of a subcarrier spacing corresponding to a primary inverse Fourier transform, and the subcarrier spacing is a subcarrier spacing of a frequency-domain subband corresponding to the first sequences. The phase difference between adjacent elements of the phase sequence is a difference obtained from a phase of an element of the phase sequence minus a phase of a previous element of the phase sequence: $mod(y(n), M*s(n))/(M*s(n))*2\pi$, where the zero-frequency index of the baseband is a zero-frequency index of a secondary inverse Fourier transform. If the zero-frequency index of the baseband is 0 Hz, the frequency-domain difference y(n) is a ratio of the index of the zero subcarrier to the subcarrier spacing. The phase compensation coefficient may be calculated according to the frequency-domain difference. Units of the subcarrier index and the subcarrier spacing are both Hertz. In an example, the primary inverse Fourier transform is inverse Fourier transform on the first sequences, and the secondary inverse Fourier transform is inverse Fourier transform on the third sequences.

In an embodiment, in response to determining that a frequency-domain difference between an index of a zero subcarrier to which a data element of a first sequence is mapped during the inverse Fourier transform and a zero-frequency index of a corresponding baseband is y(n), a phase difference between adjacent elements of a phase sequence element-wise multiplied is $mod(y(n), M*s(n)*d(n))/(M*s(n)*d(n))*2\pi$, where d(n) denotes a subcarrier spacing of a frequency-domain subband corresponding to the first sequences.

The phase difference between adjacent elements of the phase sequence is a difference obtained from a phase of an element of the phase sequence minus a phase of a previous element of the phase sequence: $mod(y(n), M*s(n)*d(n))/(M*s(n)*d(n))*2\pi$, where the zero-frequency index of the baseband is a zero-frequency index of a secondary inverse Fourier transform; and

If the zero-frequency index of the baseband is 0 Hz, the frequency-domain difference y(n) is a ratio of the index of the zero subcarrier to the subcarrier spacing.

In an embodiment, in response to phase sequences element-wise multiplied with symbols for frequency shifting being the same, a phase of an element of a coefficient group X(n) corresponding to a first data element in a second sequence without CP for each orthogonal frequency-division multiplexing (OFDM) symbol is 0; and in response to the phase sequences element-wise multiplied with symbols for frequency shifting being consecutive, a phase of an element of a coefficient group X(n) corresponding to a first data element in a second sequence without CP for a first OFDM symbol is 0. In this manner, the zero-phase index in the compensation coefficient can be determined.

In an embodiment, phases of coefficient groups X(n) are the same across consecutive time-domain symbols.

In an embodiment, phases of coefficient groups X(n) are the same across consecutive time-domain symbols, and coefficient groups X(n) corresponding to the consecutive symbols are the same.

In an embodiment, in response to determining that a frequency-domain zero subcarrier index corresponding to the n-th first sequence falls within y(n) subcarrier indices following a zero-frequency index of a channel bandwidth, phase compensation coefficient groups X(n) for all symbols satisfy

$$X(n) = exp\left(-\frac{\frac{2\pi j}{M}}{s(n)} * y(n) * \left(1 : M * s[n] + Ncp\right) - Ncp - 1\right)$$

. 1: (*M* ∗ *s(n)* + *Ncp*) denotes serial numbers of elements in the coefficient group X(n): 1, 2, ......, (*M*∗*s(n)*+ *Ncp*), and y(n) is a real number greater than or equal to 0; and the frequency-domain zero subcarrier index corresponding to the n-th first sequence is an index of the zero subcarrier to which a data element of the n-th first sequence is mapped during the inverse Fourier transform in the channel bandwidth.

In an embodiment, in response to determining that a frequency-domain zero subcarrier index corresponding to the n-th first sequence falls at an index that is y(n) subcarrier indices before a zero-frequency index of a channel bandwidth, phase compensation coefficient groups X(n) for all symbols satisfy

$$X(n) = exp\left(\frac{\frac{2\pi j}{M}}{s(n)} * y(n) * \left(1 : M * s[n] + Ncp\right) - Ncp - 1\right)$$

, 1: (*M* ∗ *s(n)* + *Ncp*) denotes serial numbers of elements in the coefficient group X(n): 1, 2, ... ..., (*M* ∗ *s(n)* + *Ncp*), and y(n) is a real number greater than or equal to 0; and the frequency-domain zero subcarrier index corresponding to the first sequence is an index of a zero subcarrier to which a data element of the n-th first sequence is mapped during the inverse Fourier transform in the channel bandwidth.

In an embodiment, in response to determining that a zero-frequency index of a channel bandwidth falls at a frequency-domain zero subcarrier index corresponding to the n-th first sequence, elements in coefficient groups X(n) for all symbols are 1, and the n-th second sequence for each symbol is not multiplied by the coefficient group. A phase of an element in a coefficient group X(n) corresponding to a first data element in a second sequence without CP for each OFDM symbol is 0.

In an embodiment, phases of phase compensation coefficient groups X(n) are consecutive across consecutive time-domain symbols and vary at equal intervals; and phase compensation coefficient groups X(n) corresponding to the consecutive time-domain symbols are different, and phase differences between all adjacent elements in consecutive phase compensation coefficient groups X(n) corresponding to the consecutive time-domain symbols are the same.

In an embodiment, in response to determining that a system zero frequency index of a subband to which the n-th first sequence is mapped falls within y(n) subcarrier indices following a baseband zero-frequency index, a coefficient group X(n,m) for the m-th symbol satisfies: X(n ,m)=exp(-2πj/M/s(n)*y(n)*([1:(M*s(n)+Ncp)]-Ncp-1+(m-1)*(M*s(n)+Ncp))), where y(n) is a real number greater than or equal to 0.

In an embodiment, in response to determining that a system zero frequency index of a subband to which the n-th first sequence is mapped falls within y(n) subcarrier indices preceding a baseband zero-frequency index, a coefficient group X(n,m) for the m-th symbol satisfies: X(n ,m)=exp(2πj/M/s(n)*y(n)*([1:(M*s(n)+Ncp)]-Ncp-1+(m-1)*(M*s(n)+Ncp))), where y(n) is a real number greater than or equal to 0.

In an embodiment, each first sequence includes k(n) data elements, and k(n) satisfies one of the following conditions: any positive integer; an integer multiple of one resource block (RB); 2 to the power of i; the ratio of two adjacent k(n) values is 2 to the power of i; or all k(n) values are the same. Each first sequence includes k(n) data elements. In an example, k(n) is any positive integer. In an example, k(n) is an integer multiple of 12, that is, an integer multiple of one RB. In an example, k(n) satisfies 2 to the power of i ($2^i$), where i is an integer greater than or equal to 0. In an example, k(n) satisfies 2 to the power of i ($2^i$), where i is an integer greater than or equal to 0. In an example, each first sequence includes the same number k(n) of data elements.

In an embodiment, zero padding at both ends is performed on each first sequence, and [*M* ∗ *s(n)* - *k(n)*]/2 zero data elements are added to each end of each second sequence.

In an embodiment, the size of the inverse Fourier transform on each first sequence satisfies one of the following conditions: the ratio of the sizes of for inverse Fourier transform on two adjacent first sequences is 2 to the power of i; or the sizes of inverse Fourier transforms on different first sequences are the same. i is an integer. In an example, M*s(n)-point inverse Fourier transform is performed on the third sequences separately, and the ratio of the sizes of inverse Fourier transforms on two adjacent third sequences is 2 to the power of i ($2^i$), where i is an integer greater than or equal to 0. In an example, M*s(n)-point inverse Fourier transform is performed on the third sequences separately, and the sizes of inverse Fourier transforms on different third sequences are the same.

In an embodiment, the to-be-transmitted data includes at least constellation point modulated data, and the to-be-transmitted data also includes at least one reference signal data element. In an embodiment, the to-be-transmitted data may include constellation point modulated data. In an embodiment, the to-be-transmitted data includes constellation point modulated data and at least one reference signal data element.

In an embodiment, performing inverse Fourier transform on the N third sequences to form the target time-domain data sequence includes performing frequency-domain zero-padding and cyclic shifting on P other initial frequency-domain data sequences in sequence to obtain P other target frequency-domain data sequences; and performing inverse Fourier transform on the N third sequences and the P other target frequency-domain data sequences to form the target time-domain data sequence. The P other target frequency-domain data sequences include data obtained by M-fold frequency-domain oversampling and are not included in data sequences generated from the to-be-transmitted data. In an example, inverse Fourier transform is performed on the N third sequences and the P other target frequency-domain data sequences to form the target time-domain data sequence. The P other initial frequency-domain data sequences may be data obtained by M-fold frequency-domain oversampling or may be data sequences not generated from the to-be-transmitted data. In an example, frequency-domain zero padding and cyclic shifting are performed in sequence on P other initial frequency-domain data sequences to obtain P other target frequency-domain data sequences; and then inverse Fourier transform is performed on the N third sequences and the P other target frequency-domain data sequences to form the target time-domain data sequence.

In an embodiment, performing inverse Fourier transform on the N third sequences to form the target time-domain data sequence includes for every N data elements, performing one oversampled inverse Fourier transform, where the N data elements are from the N third sequences one to one. In an example, performing inverse Fourier transform on the N third sequences includes for every N data elements, one oversampled inverse Fourier transform is performed, where the N data elements are from the N third sequences one to one.

In an embodiment, the target time-domain data sequence is formed by concatenating initial time-domain data sequences generated from inverse Fourier transforms on the third sequences, where the number of initial time-domain data sequences is equal to the number of inverse Fourier transforms on the third sequences. An initial time-domain data sequence is sub-symbols obtained by an oversampled inverse Fourier transform on a third sequence. In an embodiment, an oversampled inverse Fourier transform is performed on N data elements in the third sequence to obtain sub-symbols. The sub-symbols are repeatedly extended and then concatenated in the time domain to obtain the target time-domain data sequence.

In an embodiment, an inverse Fourier transform to form an initial time-domain data sequence includes extracting N data elements from the N third sequences, where the number of the N data elements is the same as the number of the first sequences, and each of the N data elements is from a respective one of the N third sequences; and performing an oversampled inverse Fourier transform on the N data elements to obtain the initial time-domain data sequence. By way of example, assuming that the N third sequences are arranged in N rows (that is, one third sequence is arranged in one row), then N data elements are selected according to column indices (that is, one column of data is selected), and for every N selected data elements (that is, every column of data), an oversampled inverse Fourier transform is performed. For another example, assuming that the N third sequences are arranged in N columns (that is, one third sequence is arranged in one column), then N data elements are selected according to row indices (that is, one row of data is selected), and for every N selected data elements (that is, every row of data), an oversampled inverse Fourier transform is performed.

In an embodiment, a concatenation interval of the initial time-domain data sequences is 1/M of a length obtained after oversampled inverse Fourier transform on N target data elements. In an embodiment, the target time-domain data sequence generated by inverse Fourier transform is formed by concatenation, where a concatenation interval between every two adjacent initial time-domain data sequences is have the length obtained after an oversampled inverse Fourier transform on every N target data elements, that is, half the length of a sub-symbol. The N target data elements are extracted from the N third sequences one to one.

In an embodiment, generating the initial time-domain data sequences by the inverse Fourier transforms on the fourth sequences includes for subbands having different subcarrier spacings, using a length of a third sequence corresponding to a subband with a minimum subcarrier spacing as a reference length; and for third sequences corresponding to subbands with non-minimum subcarrier spacings, selecting at least two third sequences, concatenating the at least two third sequences to form new N third sequences that each have a same length as the reference length, and performing inverse Fourier transforms on the new N third sequences to obtain the initial time-domain data sequences. Subbands with different subcarrier spacings represent first sequences including different numbers of data elements.

In an embodiment, each first sequence is transmitted within a frequency-domain resource block, and the frequency-domain resource block includes Z subcarriers; and the number of data elements in each of the N second sequences is: M*s(n); or a value greater than or equal to M times the number of subcarriers in the frequency-domain resource block. In an example, each of the N second sequences includes M*s(n) data elements; or includes data elements of a number greater than or equal to M times the number of subcarriers in the frequency-domain resource block.

In an embodiment, a zero-frequency index during inverse Fourier transform on a third sequence is within the range of a corresponding frequency-domain resource block; and zero-frequency indices during inverse Fourier transform on different third sequences are different. In an embodiment, the zero-frequency index refers to a zero subcarrier (that is, the 0th subcarrier or 0-indexed subcarrier) in a frequency-domain resource block.

In an embodiment, a zero-frequency index during inverse Fourier transform falls at one subcarrier in a frequency-domain resource block. In an embodiment, the zero-frequency index (that is, the zero subcarrier) at which inverse Fourier transform is performed in each original data sequence is a subcarrier in a respective frequency-domain resource block.

In an embodiment, the frequency-domain resource blocks include all or some of the frequency-domain resource blocks within the channel bandwidth; and the to-be-transmitted data includes all or some of the to-be-transmitted data within the channel bandwidth.

In an embodiment, the data transmission method also includes filtering the target time-domain data sequence. The filtering includes one of single-phase filtering or polyphase filtering.

In an embodiment, a filter function used in the polyphase filtering includes one of the following: a root raised cosine function, a raised cosine function, a rectangular function, or an isotropic orthogonal transform algorithm (IOTA) function.

In an embodiment, the data transmission method also includes performing windowing on the target time-domain data sequence.

Example one

In an example, FIG. 2 is a flowchart of generating a target time-domain data sequence according to embodiments of the present application. This example describes the generation process of the target time-domain data sequence. In this example, 4 first sequences are provided, each first sequence includes 64 data elements, and the zero-padding length is 32 in zero-padding at both ends for each first sequence.

As shown in FIG. 2, in this example, the to-be-transmitted data is divided into 4 first sequences. Each first sequence includes 64 data elements. 32 zero subcarriers are added to each of both ends of each first sequence to form 4 zero-padded first sequences, each zero-padded first sequence having 128 points. Then 128-point inverse Fourier transform is performed on the zero-padded first sequences to form 4 second sequences.

It is assumed that the zero-frequency index of the channel bandwidth falls at the zero subcarrier index during inverse Fourier transform on the first group of data. The second group of data and the fourth group of data are frequency-shifted, that is, multiplied by coefficient groups $X(2)$ and $X(4)$, to obtain corresponding third sequences. Phases of coefficient groups $X(2)$ and $X(4)$ are the same across consecutive time-domain symbols.

Assuming that the zero-frequency index of the channel bandwidth falls within 64 subcarrier indices preceding the index of the zero subcarrier to which the second group of data is mapped during inverse Fourier transform and falls within 192 subcarrier indices preceding the index of the zero subcarrier to which the fourth group of data is mapped during inverse Fourier transform, then all symbols satisfy $X(2)=X(4)=\exp(2\pi j/2/64*64*(-Ncp:2*64-1))$. Ncp denotes the length of the CP. Ncp = 4. Therefore, $X(2)=X(4)=\exp(\pi j*(-4:127))$.

Subsequently, subband-level inverse Fourier transform and polyphase filtering are performed on the 4 third sequences to form a target time-domain data sequence. The target time-domain data sequence is transmitted on a time-frequency resource.

Example two

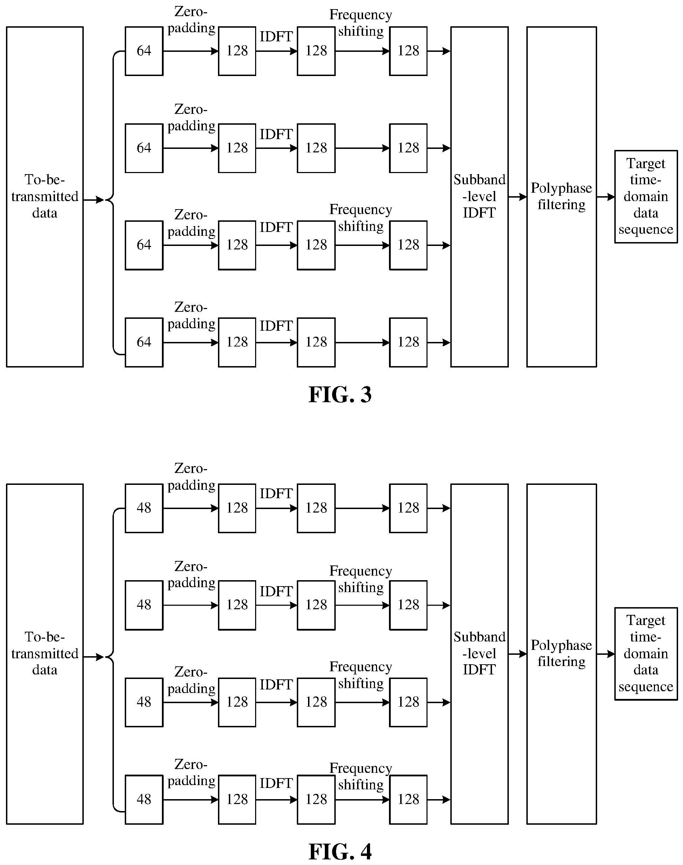

In an example, FIG. 3 is a flowchart of generating a target time-domain data sequence according to embodiments of the present application. This example describes the generation process of the target time-domain data sequence. In this example, 4 first sequences are provided, each first sequence includes 64 data elements, and the zero-padding length is 32 in zero-padding at both ends for each first sequence.

As shown in FIG. 3, in this example, the to-be-transmitted data is divided into 4 first sequences. Each first sequence includes 64 data elements. 32 zero subcarriers are added to each of both ends of each first sequence to form 4 zero-padded first sequences, each zero-padded first sequence having 128 points. Then 128-point inverse Fourier transform is performed on the zero-padded first sequences to form 4 second sequences.

It is assumed that the zero-frequency index of the channel bandwidth falls at the index of the zero subcarrier to which the second group of data is mapped during inverse Fourier transform. The first group of data and the third group of data are frequency-shifted, that is, multiplied by coefficient groups $X(1)$ and $X(3)$, to obtain corresponding third sequences. Phases of coefficient groups $X(1)$ and $X(3)$ are the same across consecutive time-domain symbols.

Assuming that the zero-frequency index of the channel bandwidth falls within 64 subcarrier indices following the index of the zero subcarrier to which the first group of data is mapped during inverse Fourier transform and falls within 64 subcarrier indices preceding the index of the zero subcarrier to which the third group of data is mapped during inverse Fourier transform, then all symbols satisfy X(1)=exp(-2πj/2/64*64*(-Ncp:2*64-1)), X(3)=exp(2πj/2/64*64*(-Ncp:2*64-1)). Ncp denotes the length of the CP. Ncp = 4. Therefore, X(1)=exp(-πj*(-4:127)), X(3)=exp(πj*(-4:127)).

Subsequently, subband-level inverse Fourier transform and polyphase filtering are performed on the 4 third sequences to form a target time-domain data sequence. The target time-domain data sequence is transmitted on a time-frequency resource.

Example three

In an example, FIG. 4 is a flowchart of generating a target time-domain data sequence according to embodiments of the present application. This example describes the generation process of the target time-domain data sequence. In this example, 4 first sequences are provided, each first sequence includes 48 data elements, and the zero-padding length is 40 in zero-padding at both ends for each first sequence.

As shown in FIG. 4, in this example, the to-be-transmitted data is divided into 4 first sequences. Each first sequence includes 48 data elements. 40 zero subcarriers are added to each of both ends of each first sequence to form 4 zero-padded first sequences, each zero-padded first sequence having 128 points. Then 128-point inverse Fourier transform is performed on the zero-padded first sequences to form 4 second sequences.

It is assumed that the zero-frequency index of the channel bandwidth falls at the index of the zero subcarrier to which the first group of data is mapped during inverse Fourier transform. The second group of data, the third group of data, and the fourth group of data are frequency-shifted, that is, multiplied by coefficient groups X(2), X(3), and X(4) to obtain corresponding third sequences. Phases of coefficient groups X(2), X(3), and X(4) are the same across consecutive time-domain symbols.

Assuming that the zero-frequency index of the channel bandwidth falls within 48 subcarrier indices preceding the index of the zero subcarrier to which the second group of data is mapped during inverse Fourier transform, falls within 96 subcarrier indices preceding the index of the zero subcarrier to which the third group of data is mapped during inverse Fourier transform, and falls within 144 subcarrier indices preceding the index of the zero subcarrier to which the fourth group of data is mapped during inverse Fourier transform, then all symbols satisfy X(2)=exp(2πj/2/64*48*(-Ncp:2*64-1)), X(3)=exp(2πj/2/64*96*(-Nep:2*64-1)), X(4)=exp(2πj/2/64*144*(-Ncp:2*64-1)). Ncp denotes the length of the CP. Ncp = 4. Therefore, X(2)=exp(3πj/4*(-4:127)), X(3)=exp(3πj/2*(-4:127)), X(4)=exp(πj/4*(-4:127)).

Subsequently, subband-level inverse Fourier transform and polyphase filtering are performed on the 4 third sequences to form a target time-domain data sequence. The target time-domain data sequence is transmitted on a time-frequency resource.

Example four

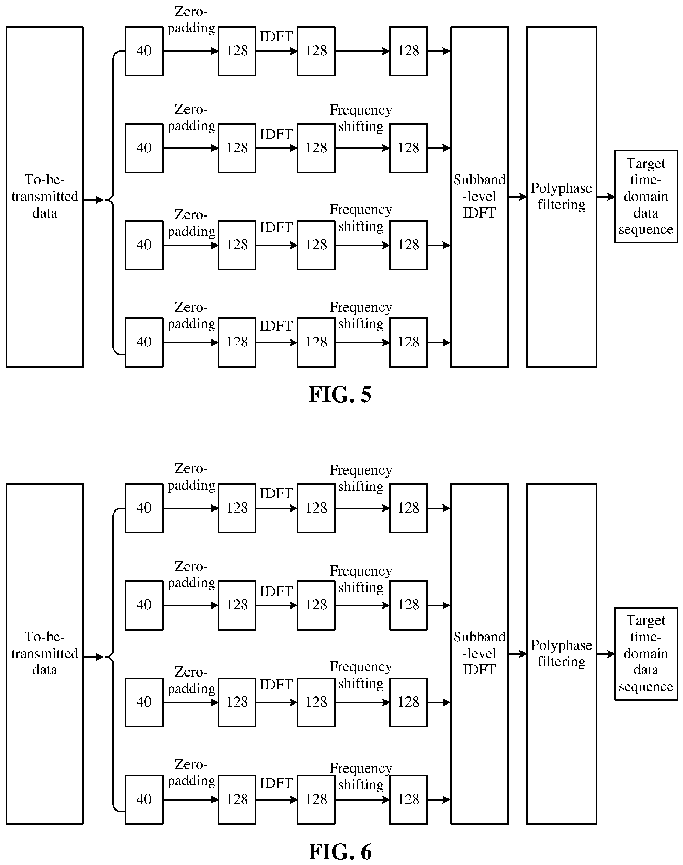

In an example, FIG. 5 is a flowchart of generating a target time-domain data sequence according to embodiments of the present application. This example describes the generation process of the target time-domain data sequence. In this example, 4 first sequences are provided, each first sequence includes 40 data elements, and the zero-padding length is 44 in zero-padding at both ends for each first sequence.

As shown in FIG. 5, in this example, the to-be-transmitted data is divided into 4 first sequences. Each first sequence includes 40 data elements. 44 zero subcarriers are added to each of both ends of each first sequence to form 4 zero-padded first sequences, each zero-padded first sequence having 128 points. Then 128-point inverse Fourier transform is performed on the zero-padded first sequences to form 4 second sequences.

It is assumed that the zero-frequency index of the channel bandwidth falls at the index of the zero subcarrier to which the first group of data is mapped during inverse Fourier transform. The second group of data, the third group of data, and the fourth group of data are frequency-shifted, that is, multiplied by coefficient groups X(2), X(3), and X(4) to obtain corresponding third sequences. Phases of coefficient groups X(2), X(3), and X(4) are the same across consecutive time-domain symbols.

Assuming that the zero-frequency index of the channel bandwidth falls within 40 subcarrier indices preceding the index of the zero subcarrier to which the second group of data is mapped during inverse Fourier transform, falls within 80 subcarrier indices preceding the index of the zero subcarrier to which the third group of data is mapped during inverse Fourier transform, and falls within 120 subcarrier indices preceding the index of the zero subcarrier to which the fourth group of data is mapped during inverse Fourier transform, then all symbols satisfy X(2)=exp(2πj/2/64*40*(-Ncp:2*64-1)), X(3)=exp(2πj/2/64*80*(-Ncp:2*64-1)), X(4)=exp(2πj/2/64*120*(-Ncp:2*64-1)). Ncp denotes the length of the CP. Ncp = 4. Therefore, X(2)=exp(5πj/8*(-4:127)), X(3)=exp(5πj/4*(-4:127)), X(4)=exp(15πj/8*(-4:127)).

Subsequently, subband-level inverse Fourier transform and polyphase filtering are performed on the 4 third sequences to form a target time-domain data sequence. The target time-domain data sequence is transmitted on a time-frequency resource.

Example five

In an example, FIG. 6 is a flowchart of generating a target time-domain data sequence according to embodiments of the present application. This example describes the generation process of the target time-domain data sequence. In this example, 4 first sequences are provided, each first sequence includes 40 data elements, and the zero-padding length is 44 in zero-padding at both ends for each first sequence.

As shown in FIG. 6, in this example, the to-be-transmitted data is divided into 4 first sequences. Each first sequence includes 40 data elements. 44 zero subcarriers are added to each of both ends of each first sequence to form 4 zero-padded first sequences, each zero-padded first sequence having 128 points. Then 128-point inverse Fourier transform is performed on the zero-padded first sequences to form 4 second sequences.

It is assumed that the zero-frequency index of the channel bandwidth falls within 0.5 subcarrier indices preceding the index of the zero subcarrier to which the first group of data is mapped during inverse Fourier transform. The first group of data, the second group of data, the third group of data, and the fourth group of data are frequency-shifted, that is, multiplied by coefficient groups X(1), X(2), X(3), and X(4) to obtain corresponding third sequences. Phases of coefficient groups X(1), X(2), X(3), and X(4) are the same across consecutive time-domain symbols.

It is assumed that the zero-frequency index of the channel bandwidth falls within 0.5 subcarrier indices preceding the index of the zero subcarrier to which the first group of data is mapped during inverse Fourier transform, falls within 40.5 subcarrier indices preceding the index of the zero subcarrier to which the second group of data is mapped during inverse Fourier transform, falls within 80.5 subcarrier indices preceding the index of the zero subcarrier to which the third group of data is mapped during inverse Fourier transform, and falls within 120.5 subcarrier indices preceding the index of the zero subcarrier to which the fourth group of data is mapped during inverse Fourier transform, then all symbols satisfy X(1) =exp($2\pi$j/2/64*0.5*(-Ncp:2*64-1)), X(2)=exp($2\pi$j/2/64*40.5*(-Ncp:2*64-1)), X(3)=exp($2\pi$j/2/64*80.5*(-Ncp:2*64-1)), X(4) =exp($2\pi$j/2/64*120.5*(-Ncp:2*64-1)). Ncp denotes the length of the CP. Ncp = 4. Therefore, X(1)=exp($\pi$j/128*(-4:127)), X(2)=exp(81$\pi$j/128*(-4:127)), X(3)=exp(161$\pi$j/128*(-4:127)), X(4)=exp(241$\pi$j/128*(-4:127)).

Subsequently, subband-level inverse Fourier transform and polyphase filtering are performed on the 4 third sequences to form a target time-domain data sequence. The target time-domain data sequence is transmitted on a time-frequency resource.

Example six

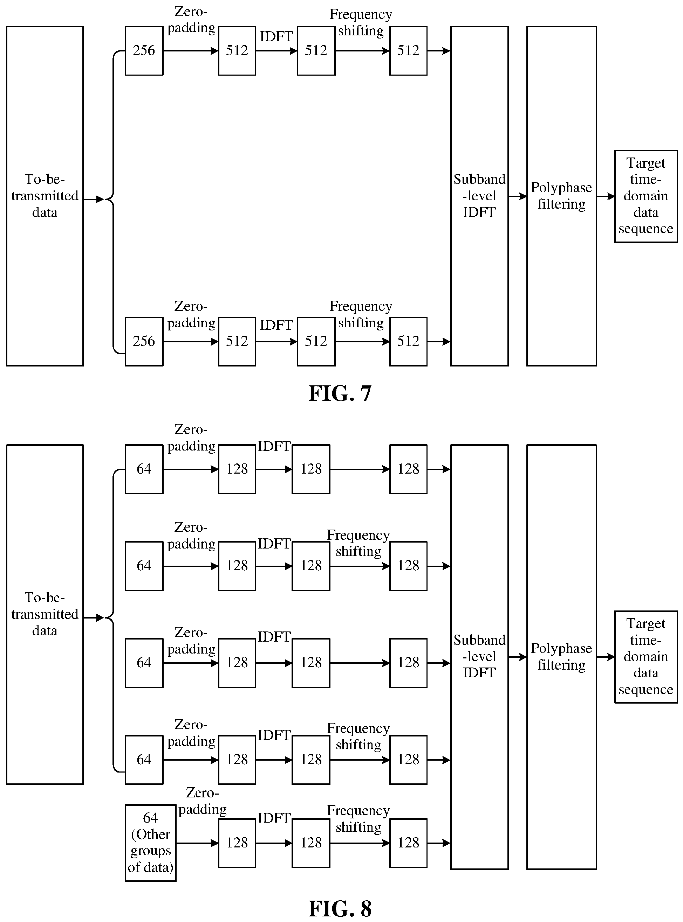

In an example, FIG. 7 is a flowchart of generating a target time-domain data sequence according to embodiments of the present application. This example describes the generation process of the target time-domain data sequence. In this example, 2 first sequences are provided, each first sequence includes 256 data elements, and the zero-padding length is 128 in zero-padding at both ends for each first sequence.

As shown in FIG. 7, in this example, the to-be-transmitted data is divided into 2 first sequences. Each first sequence includes 256 data elements. 128 zero subcarriers are added to each of both ends of each first sequence to form 2 zero-padded first sequences, each zero-padded first sequence having 512 points. Then 512-point inverse Fourier transform is performed on the zero-padded first sequences to form 2 second sequences.

Assuming that the zero-frequency index of the system falls within 5 subcarrier indices preceding the index of the zero subcarrier to which the first group of data in the system is mapped during inverse Fourier transform, then the first group of data is frequency-shifted, that is, multiplied by coefficient group X(1). Assuming that the zero-frequency index of the system falls within 3 subcarrier indices preceding the index of the zero subcarrier to which the second group of data in the system is mapped during inverse Fourier transform, then the second group of data is frequency-shifted, that is, multiplied by coefficient group X(2) to obtain corresponding third sequences. Phases of coefficient groups X(1) and X(2) are consecutive across consecutive time-domain symbols.

In this case, for the m-th symbol,

$$X(1, m)=\exp(2\pi j/2/256*5*[(-Ncp:2*256-1)+(m-1)*(2*256+Ncp)]),$$

$$X(2, m)=\exp(2\pi j/2/256*3*[(-Ncp:2*256-1)+(m-1)*(2*256+Ncp)]),$$

Ncp denotes the length of the CP. Ncp = 32. Therefore,

$$X(1, m)=\exp(5\pi j/256*[(-32:2*256-1)+(m-1)*544]),$$

$$X(2, m)=\exp(3\pi j/256*[(-32:2*256-1)+(m-1)*544]).$$

Subsequently, subband-level inverse Fourier transform and polyphase filtering are performed on the 2 third sequences to form a target time-domain data sequence. The target time-domain data sequence is transmitted on a time-frequency resource.

Example seven

In an example, FIG. 8 is a flowchart of generating a target time-domain data sequence according to embodiments of the present application. This example describes the generation process of the target time-domain data sequence. In this example, 4 first sequences are provided, each first sequence includes 64 data elements, and the zero-padding length is 32 in zero-padding at both ends for each first sequence.

As shown in FIG. 8, in this example, the to-be-transmitted data is divided into 4 first sequences. Each first sequence includes 64 data elements. 32 zero subcarriers are added to each of both ends of each first sequence to form 4 zero-padded first sequences, each zero-padded first sequence having 128 points. Then 128-point inverse Fourier transform is performed on the zero-padded first sequences to form 4 second sequences.

It is assumed that the zero-frequency index of the channel bandwidth falls at the index of the zero subcarrier to which the first group of data is mapped during inverse Fourier transform. The second group of data and the fourth group of data are frequency-shifted, that is, multiplied by coefficient groups X(2) and X(4), to obtain corresponding third sequences. Phases of coefficient groups X(2) and X(4) are the same across consecutive time-domain symbols.

Assuming that the zero-frequency index of the channel bandwidth falls within 64 subcarrier indices preceding the index of the zero subcarrier to which the second group of data is mapped during inverse Fourier transform and falls within 192 subcarrier indices preceding the index of the zero subcarrier to which the fourth group of data is mapped during inverse Fourier transform, then all symbols satisfy $X(2)=X(4)=\exp(2\pi j/2/64*64*(-Ncp:2*64-1))$. Ncp denotes the length of the CP. Ncp = 4. Therefore, $X(2)=X(4)=\exp(\pi j*(-4:127))$.

Subsequently, subband-level inverse Fourier transform and polyphase filtering are performed on the 4 third sequences and other groups of data to form a target time-domain data sequence. Other groups of data include 64 data elements and are also subjected to zero-padding, inverse discrete Fourier transform (IDFT), frequency shifting, and other operations before undergoing subband-level processing. The target time-domain data sequence is transmitted on a time-frequency resource.

Example eight

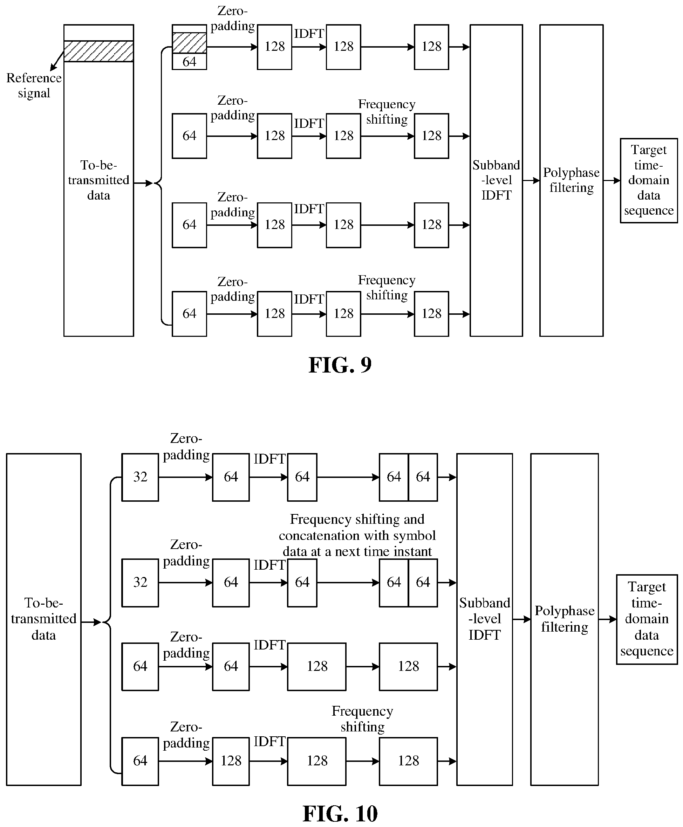

In an example, FIG. 9 is a flowchart of generating a target time-domain data sequence according to embodiments of the present application. This example describes the generation process of the target time-domain data sequence. In this example, four first sequences are provided, each first sequence includes 64 data elements, the first first sequence (the first one of the four first sequences) includes 32 reference signals, and the zero-padding length is 32 in zero-padding at both ends for each first sequence.

As shown in FIG. 9, in this example, the to-be-transmitted data is divided into 4 first sequences. Each first sequence includes 64 data elements. The first first sequence includes 32 reference signals. 32 zero subcarriers are added to each of both ends of each first sequence to form 4 zero-padded first sequences, each zero-padded first sequence having 128 points. Then 128-point inverse Fourier transform is performed on the zero-padded first sequences to form 4 second sequences.

It is assumed that the zero-frequency index of the channel bandwidth falls at the index of the zero subcarrier to which the first group of data is mapped during inverse Fourier transform. The second group of data and the fourth group of data are frequency-shifted, that is, multiplied by coefficient groups X(2) and X(4), to obtain corresponding third sequences. Phases of coefficient groups X(2) and X(4) are the same across consecutive time-domain symbols.

Assuming that the zero-frequency index of the channel bandwidth falls within 64 subcarrier indices preceding the index of the zero subcarrier to which the second group of data is mapped during inverse Fourier transform and falls within 192 subcarrier indices preceding the index of the zero subcarrier to which the fourth group of data is mapped during inverse Fourier transform, then all symbols satisfy $X(2)=X(4)=\exp(2\pi j/2/64*64*(-Ncp:2*64-1))$. Ncp denotes the length of the CP. Ncp = 4. Therefore, $X(2)=X(4)=\exp(\pi j*(-4:127))$. Subsequently, subband-level inverse Fourier transform and polyphase filtering are performed on the 4 third sequences to form a target time-domain data sequence. The target time-domain data sequence is transmitted on a time-frequency resource.

Example nine

In an example, FIG. 10 is a flowchart of generating a target time-domain data sequence according to embodiments of the present application. This example describes the generation process of the target time-domain data sequence. In this example, 4 first sequences are provided, the first two first sequences each include 32 data elements, the last two first sequences each include 64 data elements, the zero-padding length is 16 in zero-padding at both ends for each of the first two first sequences, and the zero-padding length is 32 in zero-padding at both ends for each of the last two first sequences.

As shown in FIG. 10, in this example, the to-be-transmitted data is divided into 4 first sequences. Each of the first two first sequences includes 32 data elements. Each of the last two first sequences includes 64 data elements. 16 zero subcarriers are added to each of both ends of each of the first two first sequences, each zero-padded first sequence having 64 points. 32 zero subcarriers are added to both ends of each of the last two first sequences, each zero-padded first sequence having 128 points. Thus, 4 zero-padded first sequences are formed in total.

It is assumed that the zero-frequency index of the channel bandwidth falls at the index of the zero subcarrier to which the first group of data is mapped during inverse Fourier transform. The second group of data and the fourth group of data are frequency-shifted, that is, multiplied by coefficient groups X(2) and X(4), to obtain corresponding third sequences. Phases of coefficient groups X(2) and X(4) are the same across consecutive time-domain symbols.

Assuming that the zero-frequency index of the channel bandwidth falls within 32 subcarrier indices preceding the index of the zero subcarrier to which the second group of data is mapped during inverse Fourier transform, then all symbols satisfy $X(2)=\exp(2\pi j/2/32*32*(-Ncp:2*32-1))$. Ncp denotes the length of the CP. Ncp = 2. Therefore, $X(2)=\exp(\pi j*(-2:63))$.

Assuming that the zero-frequency index of the channel bandwidth falls within 192 subcarrier indices preceding the index of the zero subcarrier to which the fourth group of data is mapped during inverse Fourier transform, then all symbols satisfy $X(4)=\exp(2\pi j/2/64*192*(-Nep:2*64-1))$. Ncp denotes the length of the CP. Ncp = 4. Therefore, $X(4)=\exp(\pi j*(-4:127))$.

Then, 64-point inverse Fourier transform is performed on the first two groups of data, and 128-point inverse Fourier transform is performed on the last two groups of data. The first two groups of data are each concatenated with symbol data at a next time instant to form two groups of data each having a length of 128 points and together with the last two groups of data, form 4 third sequences each having 128 points. Subsequently, subband-level inverse Fourier transform and polyphase filtering are performed on the 4 third sequences to form a target time-domain data sequence. The target time-domain data sequence is transmitted on a time-frequency resource.

Example ten

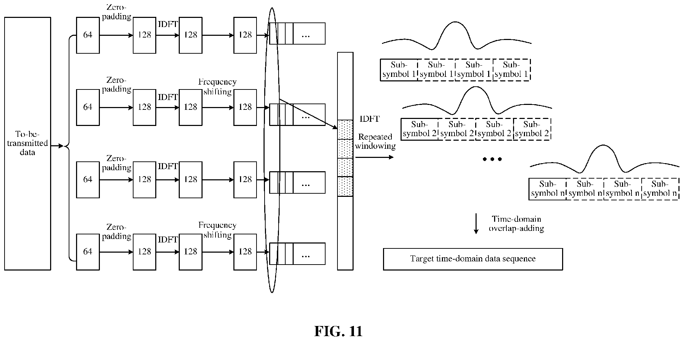

In an example, FIG. 11 is a flowchart of generating a target time-domain data sequence according to embodiments of the present application. This example describes the generation process of the target time-domain data sequence. In this example, 4 first sequences are provided, each first sequence includes 64 data elements, and the zero-padding length is 32 in zero-padding at both ends for each first sequence.

As shown in FIG. 11, in this example, the to-be-transmitted data is divided into 4 first sequences. Each first sequence includes 64 data elements. 32 zero subcarriers are added to each of both ends of each first sequence to form 4 zero-padded first sequences, each zero-padded first sequence having 128 points. Then 128-point inverse Fourier transform is performed on the zero-padded first sequences to form 4 second sequences.

It is assumed that the zero-frequency index of the channel bandwidth falls at the index of the zero subcarrier to which the first group of data is mapped during inverse Fourier transform. The second group of data and the fourth group of data are frequency-shifted, that is, multiplied by coefficient groups X(2) and X(4), to obtain corresponding third sequences. Phases of coefficient groups X(2) and X(4) are the same across consecutive time-domain symbols.

Assuming that the zero-frequency index of the channel bandwidth falls within 64 subcarrier indices preceding the index of the zero subcarrier to which the second group of data is mapped during inverse Fourier transform and falls within 192 subcarrier indices preceding the index of the zero subcarrier to which the fourth group of data is mapped during inverse Fourier transform, then all symbols satisfy $X(2)=X(4)=\exp(2\pi j/2/64*64*(-Ncp:2*64-1))$. Ncp denotes the length of the CP. Ncp = 4. Therefore, $X(2)=X(4)=\exp(\pi j*(-4:127))$.

Subsequently, 4 data elements are selected from the 4 third sequences one to one. An oversampled 16-point inverse Fourier transform is performed on the 4 data elements to obtain sub-symbols. Each sub-symbol is then repeatedly extended by a factor of 4. Finally, 128 sub-symbols are concatenated in the time domain to form a target time-domain data sequence, where a concatenation interval is 8 points, that is, half the length of a sub-symbol. The target time-domain data sequence is transmitted on a time-frequency resource.

Example eleven

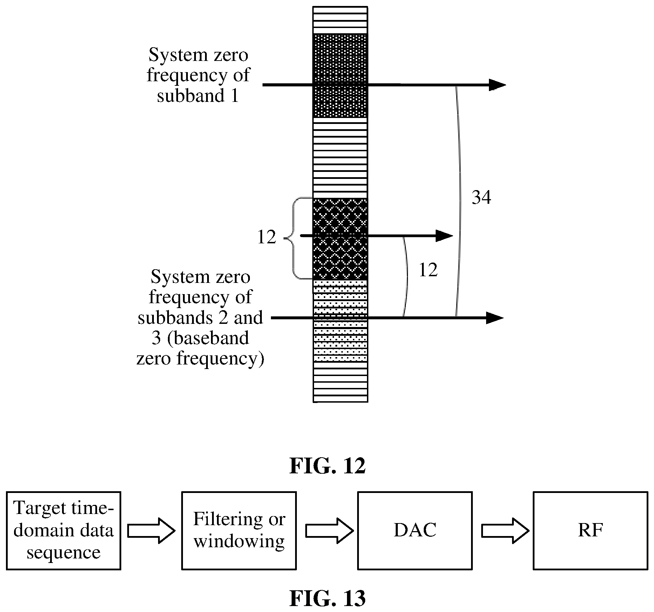

In an example, FIG. 12 is a flowchart of generating a target time-domain data sequence according to embodiments of the present application. This example describes the generation process of the target time-domain data sequence. In this example, 3 first sequences are provided, and each first sequence includes 12 data elements.

As shown in FIG. 12, in this example, the to-be-transmitted data is divided into 3 first sequences. Each first sequence includes 12 data elements. The 3 groups of data correspond to 3 subbands, that is, the 3 shaded compensation regions in the figure, that is, subband 1, subband 2, and subband 3 from top to bottom. Subcarrier spacings are the same. 12 zero subcarriers are present between subband 1 and subband 2 to serve as a guard interval. No guard interval is present between subband 2 and subband 3. The zero-frequency index of the system where subband 1 belongs falls at the eighth subcarrier of subband 1. The zero-frequency index of the system (where subband 2 and subband 3 belong) falls at the sixth subcarrier of subband 3. The zero-frequency index of the system (where subband 2 and subband 3 belong) is the zero-frequency index of the baseband.

10 zero subcarriers are added to each of both ends of each first sequence to form 3 zero-padded first sequences, each zero-padded first sequence having 32 points. Then 32-point inverse Fourier transform is performed on the zero-padded first sequences to form 3 second sequences.

The first group of data and the second group of data are frequency-shifted, that is, multiplied by coefficient groups $X(1)$ and $X(2)$, to obtain corresponding third sequences. Phases of coefficient group $X(1)$ are consecutive across consecutive time-domain symbols. Phases of coefficient group $X(2)$ are the same across consecutive time-domain symbols.

For subband 1, a frequency-domain difference between an index of the zero subcarrier of the subband 1 to which data is mapped during inverse Fourier transform and a zero-frequency index of a corresponding baseband is -34 subcarriers, so a phase difference between adjacent elements of a phase sequence element-wise multiplied is $mod(-34, 2*16)/(2*16)*2\pi=-\pi/8$, and the phase of an element of $X(n)$ corresponding to the first data element without CP for the first OFDM symbol is 0.

For subband 2, a frequency-domain difference between an index of the zero subcarrier of the subband 2 to which data is mapped during inverse Fourier transform and a zero-frequency index of a corresponding baseband is -12 subcarriers, so a phase difference between adjacent elements of a phase sequence element-wise multiplied is $mod(-12, 2*16)/(2*16)*2\pi=-3\pi/4$, and the phase of an element of $X(n)$ corresponding to the first data element without CP for every OFDM symbol is 0.

Subsequently, subband-level inverse Fourier transform and polyphase filtering are performed on the 4 third sequences to form a target time-domain data sequence. The target time-domain data sequence is transmitted on a time-frequency resource.

Example twelve

In an example, FIG. 13 is a flowchart of transmission of to-be-transmitted data according to embodiments of the present application. As shown in FIG. 13, windowing or filtering is performed on the to-be-transmitted data, followed by digital-to-analog conversion (DAC) and radio frequency (RF) processing.

As shown in FIG. 13, transmitting the to-be-transmitted data also includes performing windowing or filtering on the to-be-transmitted data, followed by DAC and RF processing.

The windowing processing includes grouping a target time-domain data sequence corresponding to the to-be-transmitted data, performing periodic extension, performing pointwise multiplication with a preset function, and overlap-adding the groups.

The filtering is single-phase filtering or polyphase filtering. The polyphase filtering includes filtering each of the new N data sequences.

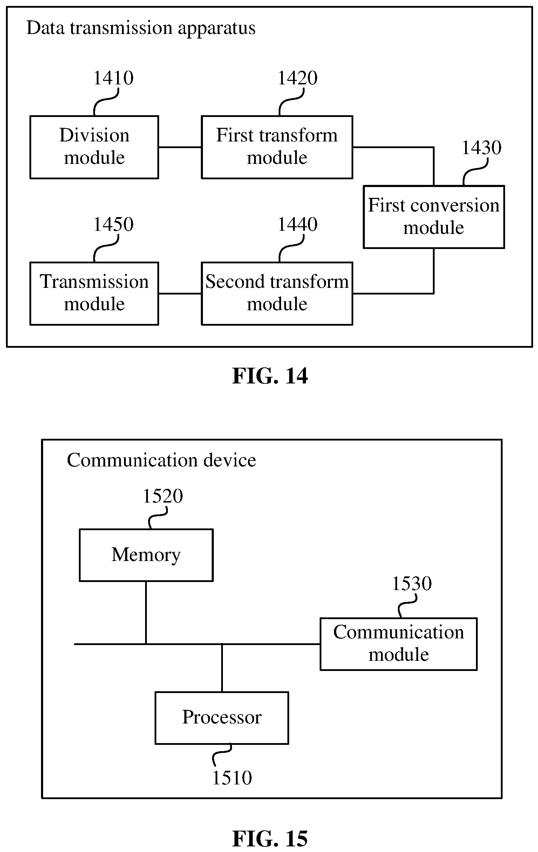

In an embodiment, FIG. 14 is a block diagram of a data transmission apparatus according to embodiments of the present application. As shown in FIG. 14, the data transmission apparatus of this embodiment includes a division module 1410, a first transform module 1420, a first conversion module 1430, a second transform module 1440, and a transmission module 1450.

The division module 1410 is configured to divide to-be-transmitted data into N first sequences.

The n-th first sequence includes $k(n)$ data elements, $k(n)$ is a positive integer, n = 1, 2, ..., N, and N is an integer greater than or equal to 2.

The first transform module 1420 is configured to perform inverse Fourier transform on the N first sequences separately to obtain N second sequences.

The first conversion module 1430 is configured to perform frequency shifting on the N second sequences to obtain N third sequences.

The second transform module 1440 is configured to perform inverse Fourier transform on the N third sequences to form a target time-domain data sequence.

The transmission module 1450 is configured to transmit the target time-domain data sequence on a preconfigured time-frequency resource.

In an embodiment, performing frequency shifting on the N second sequences to obtain N third sequences includes multiplying the n-th second sequence of the N second sequences by a coefficient group X(n) to obtain the N third sequences, where n = 1, 2, ..., N, and N is an integer greater than or equal to 2.

In an embodiment, when elements in X(n) are all 1, no frequency shifting is performed on the n-th second sequence.

In an embodiment, elements in the coefficient group X(n) satisfy at least one of the following conditions: the modulus of each element in the coefficient group X(n) is constantly 1; the coefficient group X(n) is a phase compensation coefficient group; the coefficient group X(n) is a phase sequence; the coefficient group X(n) is related to a zero-frequency index of a channel bandwidth and a frequency-domain index corresponding to the n-th first sequence; phase differences of adjacent elements in the coefficient group X(n) are equal; or phases of the elements in the coefficient group X(n) increase or decrease at equal intervals.

In an embodiment, the zero-frequency index of the channel bandwidth satisfies one of the zero-frequency index of a baseband; or a zero-frequency index during the inverse Fourier transform on the N third sequences.

In an embodiment, before performing inverse Fourier transform on the N first sequences separately to obtain the N second sequences, the method also includes performing zero-padding at both ends on the N first sequences separately to obtain zero-padded first sequences. Each zero-padded first sequence includes M*s(n) data elements, M is a positive integer, and the size of the inverse Fourier transform on each first sequence is M*s(n).

In an embodiment, a channel bandwidth includes N subbands that correspond to the N first sequences one to one.

In an embodiment, in response to determining that a subcarrier in a subband is a zero-frequency index of a baseband, a second sequence formed from a first sequence corresponding to the subband is not subjected to frequency shifting.

In an embodiment, system zero-frequency indices corresponding to at least some subbands are the same as the zero-frequency index of the baseband; or system zero-frequency indices corresponding to at least some subbands are different from the zero-frequency index of the baseband.

In an embodiment, for each subband, a system zero-frequency index corresponding to the subband is different from a frequency-domain index of the subband to which data is mapped during inverse Fourier transform.

In an embodiment, when performing inverse Fourier transform on data in different subbands having the same subcarrier spacing in the same system, zero subcarriers in different subbands have a same index.

In an embodiment, a system where a subband belongs includes at least one of the following: a long-term evolution (LTE) system, a 5G New Radio (NR) system, or a 6G system.

In an embodiment, before multiplying the n-th second sequence of the N second sequences by the coefficient group X(n), the method also includes adding a cyclic prefix (CP) having a length of Ncp to the N second sequences. Here, Ncp is a natural number, the number of elements in the coefficient group X(n) is the sum of Ncp and M*s(n), and in response to determining that Ncp is 0, no CP is added to the N second sequences.

In an embodiment, in response to determining that, when performing inverse Fourier transform on the third sequences, a zero-frequency index of the third sequences is aligned with a zero-frequency index for demodulation at a receiving end corresponding to the first sequences, phase sequences element-wise multiplied with symbols for frequency shifting corresponding to the first sequences are the same. Alternatively, when performing inverse Fourier transform on the third sequences, if a zero-frequency index of the third sequences is not aligned with a zero-frequency index for demodulation at a receiving end corresponding to the first sequences, phase sequences element-wise multiplied with consecutive symbols for frequency shifting corresponding to the first sequences are consecutive. The zero-frequency index for the inverse Fourier transform on the third sequences is aligned with a baseband zero-frequency index at a transmitting end.

In an embodiment, phases of phase compensation coefficient groups X(n) for at least part of the second sequences are the same across consecutive time-domain symbols; or phases of phase compensation coefficient groups X(n) for at least part of the second sequences are consecutive across consecutive time-domain symbols.

In an embodiment, frequency shifting processing of time-domain data carried on at least some subbands includes phase compensation coefficient groups X1(n) having same phases across consecutive time-domain symbols; or phase compensation coefficient groups X2(n) having consecutive phases across consecutive time-domain symbols.

In an embodiment, in response to determining that a frequency-domain difference between an index of the zero subcarrier to which a data element of the first sequences is mapped during the inverse Fourier transform and a zero-frequency index of a corresponding baseband is y(n), a phase difference between adjacent elements of a phase sequence element-wise multiplied is $mod(y(n), M*s(n))/(M*s(n))*2\pi$, where the frequency-domain difference y(n) is measured in units of a subcarrier spacing corresponding to a primary inverse Fourier transform, and the subcarrier spacing is a subcarrier spacing of a frequency-domain subband corresponding to the first sequences;

The phase difference between adjacent elements of the phase sequence is a difference obtained from a phase of an element of the phase sequence minus a phase of a previous element of the phase sequence: mod($y(n)$, $M * s(n)$)/($M * s(n)$) $* 2\pi$, where the zero-frequency index of the baseband is a zero-frequency index of a secondary inverse Fourier transform; and

In response to determining that the zero-frequency index of the baseband is 0 Hz, the frequency-domain difference y(n) is a ratio of a subcarrier index to the subcarrier spacing, where the subcarrier index is an index of the zero subcarrier to which the data of the first sequences is mapped during the inverse Fourier transform.

In an embodiment, in response to determining that a frequency-domain difference between an index of the zero subcarrier to which data of the first sequences is mapped during the inverse Fourier transform and a zero-frequency index of a corresponding baseband is y(n), a phase difference between adjacent elements of a phase sequence element-wise multiplied is mod($y(n)$, $M * s(n) * d(n)$)/($M * s(n) * d(n)$) $* 2\pi$, where d(n) denotes a subcarrier spacing of a frequency-domain subband corresponding to the first sequences;

The phase difference between adjacent elements of the phase sequence is a difference obtained from a phase of an element of the phase sequence minus a phase of a previous element of the phase sequence: mod($y(n)$, $M * s(n) * d(n)$)/($M * s(n) * d(n)$) $* 2\pi$, where the zero-frequency index of the baseband is a zero-frequency index of a secondary inverse Fourier transform; and

In response to determining that the zero-frequency index of the baseband is 0 Hz, the frequency-domain difference y(n) is a ratio of a subcarrier index to the subcarrier spacing, where the subcarrier index is an index of the zero subcarrier to which the data of the first sequences is mapped during the inverse Fourier transform.

In an embodiment, in response to phase sequences element-wise multiplied with symbols for frequency shifting being the same, a phase of an element of a coefficient group X(n) corresponding to a first data element in a second sequence without CP for each orthogonal frequency-division multiplexing (OFDM) symbol is 0; and in response to the phase sequences element-wise multiplied with symbols for frequency shifting being consecutive, a phase of an element of a coefficient group X(n) corresponding to a first data element in a second sequence without CP for a first OFDM symbol is 0.

In an embodiment, phases of coefficient groups X(n) are the same across consecutive time-domain symbols.

In an embodiment, phases of coefficient groups X(n) are the same across consecutive time-domain symbols, and coefficient groups X(n) corresponding to the consecutive time-domain symbols are the same.

In an embodiment, in response to determining that the frequency-domain index of the zero subcarrier to which the n-th first sequence is mapped falls within y(n) subcarrier indices following the zero-frequency index of the channel bandwidth, phase compensation coefficient groups X(n) for all symbols satisfy

$$X(n) = exp\left(-\frac{\frac{2\pi j}{M}}{s(n)} * y(n) * \left(1: M * s[n] + Ncp\right) - \right.$$

$Ncp$ - 1). 1: ($M * s(n) + Ncp$) denotes serial numbers of elements in the coefficient group X(n): 1, 2, ......, ($M * s(n) + Ncp$), and y(n) is a real number greater than or equal to 0; and the frequency-domain zero subcarrier index corresponding to the first sequence is an index of the zero subcarrier to which data of the n-th first sequence is mapped during the inverse Fourier transform in the channel bandwidth.

In an embodiment, in response to determining that the frequency-domain index of the zero subcarrier to which the n-th first sequence is mapped falls within y(n) subcarrier indices preceding the zero-frequency index of the channel bandwidth, phase compensation coefficient groups X(n) for all symbols satisfy

$$X(n) = exp\left(\frac{\frac{2\pi j}{M}}{s(n)} * y(n) * \left(1: M * s[n] + Ncp\right) - Ncp - \right.$$

1), 1: ($M * s(n) + Ncp$) denotes serial numbers of elements in the coefficient group X(n): 1, 2, ... ..., ($M * s(n) + Ncp$), and y(n) is a real number greater than or equal to 0; and the frequency-domain zero subcarrier index corresponding to the first sequence is an index of the zero subcarrier to which data of the n-th first sequence is mapped during the inverse Fourier transform in the channel bandwidth.

In an embodiment, in response to determining that the zero-frequency index of the channel bandwidth falls at the frequency-domain index of the zero subcarrier to which the n-th first sequence is mapped, elements in coefficient groups X(n) for all symbols are 1, and the n-th second sequence for each symbol is not multiplied by the coefficient group; and a phase of an element in a coefficient group X(n) corresponding to a first data element in a second sequence without CP for each OFDM symbol is 0.

In an embodiment, phases of phase compensation coefficient groups X(n) are consecutive across consecutive time-domain symbols and vary at equal intervals; and phase compensation coefficient groups X(n) corresponding to the consecutive time-domain symbols are different, and phase differences between all adjacent elements in consecutive phase compensation coefficient groups X(n) corresponding to the consecutive time-domain symbols are the same.

In an embodiment, in response to determining that the index of the zero frequency of the system where the subband (to which the n-th first sequence is mapped) belongs falls within y(n) subcarrier indices following the baseband zero-frequency index, a coefficient group X(n,m) for the m-th symbol satisfies: X(n,m)=exp(-2$\pi$j/M/s(n)*y(n)*([1:(M*s(n)+Ncp)]-Ncp-1+(m-1)*(M*s(n)+Ncp))), where y(n) is a real number greater than or equal to 0.

In an embodiment, in response to determining that the index of the zero frequency of the system where the subband (to which the n-th first sequence is mapped) belongs falls within y(n) subcarrier indices preceding the baseband zero-frequency index, a coefficient group X(n,m) for the m-th symbol satisfies: X(n,m)=exp(2πj/M/s(n)*y(n)*([1:(M*s(n) +Ncp)]-Ncp-1+(m-1)*(M*s(n)+Ncp))), where y(n) is a real number greater than or equal to 0.

In an embodiment, each first sequence includes k(n) data elements, and k(n) satisfies one of the following conditions: any positive integer; an integer multiple of one resource block (RB); 2 to the power of i; the ratio of two adjacent k(n) values is 2 to the power of i; or all k(n) values are the same.

In an embodiment, zero padding at both ends is performed on each first sequence, and $[M * s(n) - k(n)]/2$ zero data elements are added to each end of each second sequence.

In an embodiment, the size of the inverse Fourier transform on each first sequence satisfies one of the following conditions: the ratio of the sizes of inverse Fourier transforms on two adjacent first sequences is 2 to the power of i; or the sizes of inverse Fourier transforms on different first sequences are the same. i is an integer.

In an embodiment, performing inverse Fourier transform on the N third sequences to form the target time-domain data sequence includes performing frequency-domain zero-padding and cyclic shifting on P other initial frequency-domain data sequences in sequence to obtain P other target frequency-domain data sequences; and performing inverse Fourier transform on the N third sequences and the P other target frequency-domain data sequences to form the target time-domain data sequence. The P other target frequency-domain data sequences include data obtained by M-fold frequency-domain oversampling and are not included in data sequences generated from the to-be-transmitted data.

In an embodiment, performing inverse Fourier transform on the N third sequences to form the target time-domain data sequence includes for every N data elements, performing one oversampled inverse Fourier transform, where the N data elements are from the N third sequences one to one.

In an embodiment, the target time-domain data sequence is formed by concatenating initial time-domain data sequences generated from inverse Fourier transforms on the third sequences, where the number of initial time-domain data sequences is equal to the number of inverse Fourier transforms on the third sequences.

In an embodiment, an inverse Fourier transform to form an initial time-domain data sequence includes extracting N data elements from the N third sequences, where the number of the N data elements is the same as the number of the first sequences, and each of the N data elements is from a respective one of the N third sequences; and performing an oversampled inverse Fourier transform on the N data elements to obtain the initial time-domain data sequence.

In an embodiment, a concatenation interval of the initial time-domain data sequences is 1/M of a length obtained after oversampled inverse Fourier transform on N target data elements.

In an embodiment, generating the initial time-domain data sequences by the inverse Fourier transforms on the fourth sequences includes for subbands having different subcarrier spacings, using a length of a third sequence corresponding to a subband with a minimum subcarrier spacing as a reference length; and for third sequences corresponding to subbands with non-minimum subcarrier spacings, selecting at least two third sequences, concatenating the at least two third sequences to form new N third sequences that each have a same length as the reference length, and performing inverse Fourier transforms on the new N third sequences to obtain the initial time-domain data sequences.

In an embodiment, each first sequence is transmitted within a frequency-domain resource block, and the frequency-domain resource block includes Z subcarriers; and the number of data elements in each of the N second sequences is: M*s(n); or a value greater than or equal to M times the number of subcarriers in the frequency-domain resource block.

In an embodiment, a zero-frequency index during inverse Fourier transform on a third sequence is within the range of a corresponding frequency-domain resource block; and zero-frequency indices during inverse Fourier transform on different third sequences are different.

In an embodiment, a zero-frequency index during inverse Fourier transform falls at one subcarrier in a frequency-domain resource block.

In an embodiment, the frequency-domain resource blocks include all or some of the frequency-domain resource blocks within the channel bandwidth; and the to-be-transmitted data includes all or some of the to-be-transmitted data within the channel bandwidth.

In an embodiment, the data transmission method also includes filtering the target time-domain data sequence. The filtering includes one of single-phase filtering or polyphase filtering.

In an embodiment, a filter function used in the polyphase filtering includes one of the following: a root raised cosine function, a raised cosine function, a rectangular function, or an isotropic orthogonal transform algorithm (IOTA) function.

In an embodiment, the data transmission method also includes performing windowing on the target time-domain data sequence.

The data transmission apparatus of this embodiment is configured to perform the data transmission method of the embodiment shown in FIG. 1. The apparatus of this embodiment and the method of the embodiment shown in FIG. 1 have similar implementation principles and technical effects. The implementation principles and technical effects of the apparatus are not repeated here.

In an embodiment, FIG. 15 is a diagram illustrating the structure of a communication device according to embodiments of the present application. As shown in FIG. 15, the device of the present application includes a processor 1510, a memory 1520, and a communication module 1530. One or more processors 1510 may be provided in the device. FIG. 15 shows one processor 1510 as an example. One or more memories 1520 may be provided in the device. FIG. 15 shows one memory 1520 as an example. The processor 1510, the memory 1520, and the communication module 1530 of the device may be connected by a bus or otherwise. FIG. 15 uses connection by a bus as an example. In this embodiment, the communication device may be a base station or a terminal.

The memory 1520, as a computer-readable storage medium, may be configured to store software programs, computer-executable programs, and modules such as program instructions/modules corresponding to the device of any embodiment of the present application (such as the division module 1410, the first transform module 1420, the first conversion module 1430, the second transform module 1440, and the transmission module 1450 in the data transmission apparatus). The memory 1520 may include a program storage region and a data storage region. The program storage region may store an operating system and an application program required by at least one function. The data storage region may store data created according to the use of the device. Additionally, the memory 1520 may include a high-speed random-access memory and may also include a nonvolatile memory such as at least one disk memory, a flash memory, or another nonvolatile solid-state memory. In some examples, memories 1520 remote relative to the processor 1510 and connectable to the device via a network may be provided. Examples of the network include, but are not limited to, the Internet, an intranet, a local area network, a mobile communication network, and a combination thereof.

The communication device may be configured to perform the communication transmission method of any previous embodiment and has corresponding functions and effects.

Embodiments of the present application provide a storage medium storing computer-executable instructions which, when executed by a computer processor, cause the computer processor to perform a data transmission method. The method includes dividing to-be-transmitted data into N first sequences, where the n-th first sequence includes k(n) data elements, k(n) is a positive integer, n = 1, 2, ..., N, and N is an integer greater than or equal to 2; performing inverse Fourier transform and frequency shifting on the N first sequences separately to obtain a target time-domain data sequence; and transmitting the target time-domain data sequence on a preconfigured time-frequency resource.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

**Claims**

1. A data transmission method, comprising:

   dividing to-be-transmitted data into N first sequences, wherein an n-th first sequence comprises k(n) data elements, k(n) is a positive integer, n = 1, 2, ..., N, and N is an integer greater than or equal to 2;

performing inverse Fourier transform on the N first sequences separately to obtain N second sequences;

performing frequency shifting on the N second sequences to obtain N third sequences;

performing inverse Fourier transform on the N third sequences to form a target time-domain data sequence; and

transmitting the target time-domain data sequence on a preconfigured time-frequency resource.

2. The method of claim 1, wherein performing frequency shifting on the N second sequences to obtain the N third sequences comprises:

multiplying an n-th second sequence of the N second sequences by a coefficient group X(n) to obtain the N third sequences, wherein n = 1, 2, ..., N, and N is an integer greater than or equal to 2.

3. The method of claim 2, wherein in response to determining that all elements in the coefficient group X(n) are 1, the n-th second sequence is not subjected to frequency shifting.

4. The method of claim 2, wherein elements in the coefficient group X(n) satisfy at least one of the following conditions:

a modulus of each element in the coefficient group X(n) is constantly 1;

the coefficient group X(n) is a phase compensation coefficient group;

the coefficient group X(n) is a phase sequence;

the coefficient group X(n) is related to a zero-frequency index of a channel bandwidth and a frequency-domain index corresponding to the n-th first sequence;

phase differences of adjacent elements in the coefficient group X(n) are equal; or

phases of the elements in the coefficient group X(n) increase or decrease at equal intervals.

5. The method of claim 1, wherein a zero-frequency index of a channel bandwidth is one of a zero-frequency index of a baseband; or a zero-frequency index during the inverse Fourier transform on each of the N third sequences.

6. The method of claim 1, wherein before performing inverse Fourier transform on the N first sequences separately to obtain the N second sequences, the method further comprises:

performing zero-padding at both ends on the N first sequences separately to obtain zero-padded first sequences, wherein

each zero-padded first sequence comprises M*s(n) data elements, M is a positive integer, and a size of the inverse Fourier transform on each first sequence is M*s(n).

7. The method of claim 1, wherein a channel bandwidth comprises N subbands that correspond to the N first sequences one to one.

8. The method of claim 1, wherein in response to determining that a subcarrier in a subband is a zero-frequency index of a baseband, a second sequence formed from a first sequence corresponding to the subband is not subjected to frequency shifting.

9. The method of claim 1, wherein

system zero-frequency indices corresponding to at least some subbands are the same as a zero-frequency index of a baseband; or

system zero-frequency indices corresponding to at least some subbands are different from a zero-frequency index of a baseband.

10. The method of claim 1, wherein for each subband, a system zero-frequency index corresponding to the subband is different from a frequency-domain index of a zero frequency of the subband to which data is mapped during inverse Fourier transform.

11. The method of claim 1, wherein when performing inverse Fourier transform on data in different subbands having a same subcarrier spacing in a same system, zero subcarriers in different subbands have a same index.

12. The method of claim 1, wherein a system to which a subband belongs comprises at least one of the following: a long-term evolution, LTE, system, a 5G New Radio, NR, system, or a 6G system.

13. The method of claim 2, wherein before multiplying the n-th second sequence of the N second sequences by the coefficient group X(n), further comprises:

adding a cyclic prefix, CP, having a length of Ncp to the N second sequences, wherein Ncp is a natural number, a number of elements in the coefficient group X(n) is a sum of Ncp and M*s(n), and in response to determining that Ncp is 0, determining that no CP is added to the N second sequences.

14. The method of claim 1, wherein

in response to determining that, when performing inverse Fourier transform on the third sequences, a zero-frequency index corresponding to the third sequences is aligned with a zero-frequency index for demodulation at a receiving end corresponding to the first sequences, phase sequences element-wise multiplied with symbols for frequency shifting corresponding to the first sequences are the same; or
in response to determining that, when performing inverse Fourier transform on the third sequences, a zero-frequency index corresponding to the third sequences is not aligned with a zero-frequency index for demodulation at a receiving end corresponding to the first sequences, phase sequences element-wise multiplied with consecutive symbols for frequency shifting corresponding to the first sequences are consecutive;
wherein the zero-frequency index of the third sequences is aligned with a baseband zero-frequency index at a transmitting end.

15. The method of claim 2, wherein for at least part of the second sequences,

phases of phase compensation coefficient groups X(n) are the same across consecutive time-domain symbols; or
phases of phase compensation coefficient groups X(n) are consecutive across consecutive time-domain symbols.

16. The method of claim 2, wherein frequency shifting processing of time-domain data carried on at least some subbands comprises:

phase compensation coefficient groups X1(n) having same phases across consecutive time-domain symbols; or
phase compensation coefficient groups X2(n) having consecutive phases across consecutive time-domain symbols.

17. The method of claim 2, wherein

in response to determining that a frequency-domain difference between an index of a zero subcarrier to which a data element of a first sequence is mapped during the inverse Fourier transform and a zero-frequency index of a corresponding baseband is y(n), a phase difference between adjacent elements of a phase sequence element-wise multiplied is $\mathrm{mod}(y(n), M*s(n))/(M*s(n))*2\pi$, wherein the frequency-domain difference y(n) is measured in units of a subcarrier spacing corresponding to a primary inverse Fourier transform, and the subcarrier spacing is a subcarrier spacing of a frequency-domain subband corresponding to the first sequences;
wherein the phase difference between adjacent elements of the phase sequence is a difference obtained from a phase of an element of the phase sequence minus a phase of a previous element of the phase sequence: $\mathrm{mod}(y(n), M*s(n))/(M*s(n))*2\pi$, wherein the zero-frequency index of the baseband is a zero-frequency index of a secondary inverse Fourier transform; or
in response to determining that the zero-frequency position of the baseband is 0 Hz, the frequency-domain difference y(n) is a ratio of an index of a zero subcarrier to which a data element of a first sequence is mapped during the inverse Fourier transform to the subcarrier spacing.

18. The method of claim 2, wherein

in response to determining that a frequency-domain difference between an index of a zero subcarrier to which a data element of a first sequence is mapped during the inverse Fourier transform and a zero-frequency index of a corresponding baseband is y(n), a phase difference between adjacent elements of a phase sequence element-wise multiplied is $\mathrm{mod}(y(n), M*s(n)*d(n))/(M*s(n)*d(n))*2\pi$, wherein d(n) denotes a subcarrier spacing of a frequency-domain subband corresponding to the first sequence;
wherein the phase difference between adjacent elements of the phase sequence is a difference obtained from a phase of an element of the phase sequence minus a phase of a previous element of the phase sequence: mod(y(n), $M * s(n) * d(n)$)/($M * s(n) * d(n)$) $* 2\pi$, wherein the zero-frequency index of the baseband is a zero-frequency index of a secondary inverse Fourier transform; or

in response to determining that the zero-frequency index of the baseband is 0 Hz, the frequency-domain difference y(n) is a ratio of an index of a zero subcarrier to which a data element of a first sequence is mapped during the inverse Fourier transform to the subcarrier spacing.

19. The method of claim 2, wherein

in response to phase sequences element-wise multiplied with symbols for frequency shifting being the same, a phase of an element of a coefficient group X(n) corresponding to a first data element in a second sequence without CP for each orthogonal frequency-division multiplexing (OFDM) symbol is 0; or

in response to the phase sequences element-wise multiplied with symbols for frequency shifting being consecutive, a phase of an element of a coefficient group X(n) corresponding to a first data element in a second sequence without CP for a first OFDM symbol is 0.

20. The method of claim 2, wherein phases of coefficient groups X(n) are the same across consecutive time-domain symbols.

21. The method of claim 2, wherein phases of coefficient groups X(n) are the same across consecutive time-domain symbols, and coefficient groups X(n) corresponding to the consecutive time-domain symbols are the same.

22. The method of claim 2, wherein

in response to determining that a frequency-domain zero subcarrier index corresponding to the n-th first sequence falls within y(n) subcarrier indices following a zero-frequency index of a channel bandwidth, phase compensation coefficient groups X(n) for all symbols satisfy

$$X(n) = exp\left(-\frac{\frac{2\pi j}{M}}{s(n)} * y(n) * \left(1 : M * s[n] + Ncp\right) - Ncp - 1\right),$$

wherein 1: ($M * s(n) + Ncp$) denotes serial numbers of elements in the coefficient group X(n): 1, 2, ......, ($M * s(n) + Ncp$), and y(n) is a real number greater than or equal to 0; and

the frequency-domain zero subcarrier index corresponding to the n-th first sequence is an index of the zero subcarrier to which a data element of the n-th first sequence is mapped during the inverse Fourier transform in the channel bandwidth.

23. The method of claim 2, wherein

in response to determining that a frequency-domain zero subcarrier index corresponding to the n-th first sequence falls within y(n) subcarrier indices preceding a zero-frequency index of a channel bandwidth, phase compensation coefficient groups X(n) for all symbols satisfy

$$X(n) = exp\left(\frac{\frac{2\pi j}{M}}{s(n)} * y(n) * \left(1 : M * s[n] + Ncp\right) - Ncp - 1\right),$$

wherein 1: ($M * s(n) + Ncp$) denotes serial numbers of elements in the coefficient group X(n): 1, 2, ......, ($M * s(n) + Ncp$), and y(n) is a real number greater than or equal to 0; and

the frequency-domain zero subcarrier index corresponding to the n-th first sequence is an index of a zero subcarrier to which a data element of the n-th first sequence is mapped during the inverse Fourier transform in the channel bandwidth.

24. The method of claim 2, wherein

in response to determining that a zero-frequency index of a channel bandwidth falls at a frequency-domain zero subcarrier index corresponding to the n-th first sequence, elements in coefficient groups X(n) for all symbols are 1, and the n-th second sequence for each symbol is not multiplied by the coefficient group; and

a phase of an element in a coefficient group X(n) corresponding to a first data element in a second sequence without CP for each OFDM symbol is 0.

25. The method of claim 2, wherein

phases of phase compensation coefficient groups X(n) are consecutive across consecutive time-domain symbols and vary at equal intervals; and

phase compensation coefficient groups X(n) corresponding to consecutive symbols in the time domain are different, and phase differences between all adjacent elements in consecutive phase compensation coefficient groups X(n) corresponding to the consecutive time-domain symbols are the same.

26. The method of claim 2, wherein

in response to determining that a system zero frequency index of a subband to which the n-th first sequence is mapped falls within y(n) subcarrier indices following a zero-frequency index of a baseband, a coefficient group X(n,m) for an m-th symbol satisfies: X(n,m)=exp(-2$\pi$j/M/s(n)*y(n)*([1:(M*s(n)+Ncp)]-Ncp-1+(m-1)*(M*s(n)+Ncp))), wherein y(n) is a real number greater than or equal to 0.

27. The method of claim 1, wherein

in response to determining that a system zero frequency index of a subband to which the n-th first sequence is mapped falls within y(n) subcarrier indices preceding a zero-frequency index of a baseband, a coefficient group X(n,m) for an m-th symbol satisfies: X(n,m)=exp(2$\pi$j/M/s(n)*y(n)*([1:(M*s(n)+Ncp)]-Ncp-1+(m-1)*(M*s(n)+Ncp))), wherein y(n) is a real number greater than or equal to 0.

28. The method of claim 1, wherein performing inverse Fourier transform on the N third sequences to form the target time-domain data sequence comprises:

performing frequency-domain zero-padding and cyclic shifting on P other initial frequency-domain data sequences in sequence to obtain P other target frequency-domain data sequences; and

performing inverse Fourier transform on the N third sequences and the P other target frequency-domain data sequences to form the target time-domain data sequence;

wherein the P other target frequency-domain data sequences comprise data obtained by M-fold frequency-domain oversampling and are not comprised in data sequences generated from the to-be-transmitted data.

29. The method of claim 1, wherein the target time-domain data sequence is formed by concatenating initial time-domain data sequences generated from inverse Fourier transforms on the third sequences, wherein a number of initial time-domain data sequences is equal to a size of inverse Fourier transforms on the third sequences.

30. The method of claim 29, wherein an inverse Fourier transform of the inverse Fourier transforms on the third sequences to form an initial time-domain data sequence of the initial time-domain data sequences comprises:

extracting N data elements from the N third sequences, wherein a number of the N data elements is the same as a number of the first sequences, and each of the N data elements is from a respective one of the N third sequences; and

performing an oversampled inverse Fourier transform on the N data elements to obtain the initial time-domain data sequence.

31. The method of claim 29, wherein a concatenation interval of the initial time-domain data sequences is 1/M of a length obtained after oversampled inverse Fourier transform on N target data elements.

32. The method of claim 29, wherein generating the initial time-domain data sequences by the inverse Fourier transforms on the third sequences comprises:

for subbands having different subcarrier spacings, using a length of a third sequence corresponding to a subband with a minimum subcarrier spacing as a reference length; and

for third sequences corresponding to subbands with non-minimum subcarrier spacings, selecting at least two third sequences, concatenating the at least two third sequences to form new N third sequences that each have a same length as the reference length, and performing inverse Fourier transforms on the new N third sequences to obtain the initial time-domain data sequences.

33. The method of claim 1, wherein

each first sequence is transmitted within a frequency-domain resource block, and the frequency-domain resource block comprises Z subcarriers; and

a number of data elements in each of the N second sequences is: M*s(n); or a value greater than or equal to M times a number of subcarriers in the frequency-domain resource block.

34. A communication device, comprising a memory and at least one processor, wherein

the memory is configured to store at least one program; and
when executed by the at least one processor, the at least one program causes the at least one processor to perform the method of any one of claims 1 to 33.

35. A storage medium storing a computer program which, when executed by a processor, causes the processor to perform the method of any one of claims 1 to 33.

Divide to-be-transmitted data into N first sequences ⌇S110

Perform inverse Fourier transform on the N first sequences separately to obtain N second sequences ⌇S120

Perform frequency shifting on the N second sequences to obtain N third sequences ⌇S130

Perform inverse Fourier transform on the N third sequences to form the target time-domain data sequence ⌇S140

Transmit the target time-domain data sequence on a preconfigured time-frequency resource ⌇S150

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

**FIG. 11**

System zero
frequency of
subband 1

12 {

System zero
frequency of
subbands 2 and
3 (baseband
zero frequency)

34

12

**FIG. 12**

| Target time-domain data sequence | ⟹ | Filtering or windowing | ⟹ | DAC | ⟹ | RF |

**FIG. 13**

Data transmission apparatus

1410

Division
module

1420

First transform
module

1430

First conversion
module

1450

Transmission
module

1440

Second transform
module

**FIG. 14**

Communication device

1520

Memory

1530

Communication
module

Processor

1510

**FIG. 15**

## INTERNATIONAL SEARCH REPORT

| | International application No. |
|---|---|
| | **PCT/CN2024/104123** |

**A.   CLASSIFICATION OF SUBJECT MATTER**

H04L 27/26(2006.01)i

According to International Patent Classification (IPC) or to both national classification and IPC

**B.   FIELDS SEARCHED**

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, VCN, ENTXT, DWPI, CNKI, 3GPP: 傅里叶逆变换, 频移, 乘, 序列, 子带, IDFT, IFFT, sequence, multiply, sub-band, CP

**C.   DOCUMENTS CONSIDERED TO BE RELEVANT**

| Category* | Citation of document, with indication, where appropriate, of the relevant passages | Relevant to claim No. |
|---|---|---|
| PX | CN 118118302 A (ZTE CORP.) 31 May 2024 (2024-05-31)<br>description, paragraphs [0034]-[0126] | 1-35 |
| X | CN 115913855 A (ZTE CORP.) 04 April 2023 (2023-04-04)<br>description, paragraphs [0041]-[0263] | 1-35 |
| A | CN 115883306 A (ZTE CORP.) 31 March 2023 (2023-03-31)<br>entire document | 1-35 |
| A | CN 110430152 A (SHANGHAI ADVANCED RESEARCH INSTITUTE, CHINESE ACADEMY OF SCIENCES) 08 November 2019 (2019-11-08)<br>entire document | 1-35 |
| A | WO 2018058678 A1 (HUAWEI TECHNOLOGIES CO., LTD.) 05 April 2018 (2018-04-05)<br>entire document | 1-35 |
| A | INTERDIGITAL INC. "R1-1714153 On Sequence Design for 1-symbol Short-PUCCH of up to 2 Bits"<br>*3GPP TSG RAN WG1 Meeting #90*. 25 August 2017 (2017-08-25),<br>entire document | 1-35 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 October 2024** | **15 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/104123**

| Patent document cited in search report | | | Publication date (day/month/year) | Patent family member(s) | | | Publication date (day/month/year) |
|---|---|---|---|---|---|---|---|
| CN | 118118302 | A | 31 May 2024 | WO | 2024114416 | A1 | 06 June 2024 |
| CN | 115913855 | A | 04 April 2023 | WO | 2023051592 | A1 | 06 April 2023 |
| | | | | EP | 4395251 | A1 | 03 July 2024 |
| CN | 115883306 | A | 31 March 2023 | WO | 2023051351 | A1 | 06 April 2023 |
| | | | | EP | 4412167 | A1 | 07 August 2024 |
| CN | 110430152 | A | 08 November 2019 | | None | | |
| WO | 2018058678 | A1 | 05 April 2018 | | None | | |

Form PCT/ISA/210 (patent family annex) (July 2022)